**Europäisches Patentamt**

**European Patent Office**

**Office européen des brevets**

(19)

(11) Veröffentlichungsnummer: **0 356 814 B1**

(12) **EUROPÄISCHE PATENTSCHRIFT**

(45) Veröffentlichungstag der Patentschrift: **17.11.94**

(51) Int. Cl.$^5$: **C08G 65/26**, C08G 18/50

(21) Anmeldenummer: **89115151.6**

(22) Anmeldetag: **17.08.89**

(54) **Verfahren zur Herstellung von Polyetherpolyolen auf Basis aromatischer Di- und/oder Polyamine und deren Verwendung für Polyurethan- und Polyisocyanurat-Kunststoffe.**

(30) Priorität: **30.08.88 DE 3829290**

(43) Veröffentlichungstag der Anmeldung:
**07.03.90 Patentblatt 90/10**

(45) Bekanntmachung des Hinweises auf die
Patenterteilung:
**17.11.94 Patentblatt 94/46**

(84) Benannte Vertragsstaaten:
**BE DE ES FR GB IT NL**

(56) Entgegenhaltungen:
**EP-A- 0 001 800**
**EP-A- 0 239 891**
**EP-A- 0 318 748**
**US-A- 4 243 759**
**US-A- 4 614 754**

**CHEMICAL ABSTRACTS, vol. 100, no. 12,
März 1984 Columbus, Ohio, USA& JP-
58134108**

(73) Patentinhaber: **BAYER AG**

**D-51368 Leverkusen (DE)**

(72) Erfinder: **Dietrich, Manfred, Dr.
Dresdener Strasse 16
D-5090 Leverkusen 1 (DE)**
Erfinder: **Kaufung, Reinhard, Dr. c/o Sumitomo Bayer
Urethane Co., Ltd.
13-26, 3-chome, Kukuchi
Amagasaki, Hyogo Pref. 661 (JP)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 356 814 B1

**Beschreibung**

Die vorliegende Erfindung betrifft ein Verfahren zur Herstellung verbesserter basischer Polyetherpolyole sowie deren Verwendung zur Herstellung von Polyurethan- und Polyisocyanurat-Kunststoffen.

Alkylenoxidaddukte von Toluylendiaminen, im folgenden TDA genannt, insbesondere von 2,4- und 2,6-TDA und von Gemischen daraus, und deren Verwendung zur Herstellung von Polyurethanen ist schon lange bekannt (GB-PS 972 772). In der deutschen Offenlegungsschrift 2 017 038 werden auch Polyether auf Basis von o-TDA und deren Verwendung zur Herstellung von Polyurethanen beansprucht.

In US-PS 3 499 009 werden Alkylenoxidaddukte von Kondensationsprodukten aus Anilin und Formaldehyd, im folgenden MDA genannt, beschrieben.

Bei diesen Polyethern reagieren sämtliche aminischen Protonen der aromatischen Amine mit Epoxiden.

TDA wird in großen Mengen als Ausgangsprodukt zur Herstellung von Toluylendiisocyanat (TDI) produziert. Durch die gute Zugänglichkeit war es von Anfang an attraktiv, das rohe TDA, welches neben den 2,4- und 2,6-Isomeren auch geringe Mengen o-Anteile enthält, als Starter für Hartschaumpolyether einzusetzen. Seit einigen Jahren ist es bei der TDA-Fabrikation üblich, dieses rohe TDA durch Destillation zu reinigen, wobei das o-TDA - ein Gemisch aus 2,3- und 3,4-TDA mit bis zu 15 Gew.-% Verunreinigungen wie Diaminocyclohexan, Hexahydrotoluylendiamin, Anilin, Toluidin usw. - als Nebenprodukt anfällt. Dieses preiswerte Zwangsanfallprodukt wird jetzt vermehrt sowohl in der vorliegenden Form als auch nach weiterer Reinigung als Starter für basische Polyether eingesetzt.

In den letzten zehn Jahren wurden die Arbeiten auf dem Gebiet intensiviert, da sich herausstellte (US-PS 4 209 609 = EP-A 0 001 800), daß Polyurethan-Hartschaumstoffe auf Basis von TDA-Polyethern gegenüber herkömmlichen Polyurethan-Hartschaumstoffen einige gravierende Vorteile aufweisen, wenn sie im OH-Zahl-Bereich 400 bis 630 liegen, und in der Weise hergestellt werden, daß TDA zunächst mit etwa 4 Mol Ethylenoxid und anschließend mit Propylenoxid umgesetzt wird, d. h. neben einer hohen OH-Zahl und einem Mindestanteil an Ethylenoxid müssen fast alle Endgruppen sekundär sein. Als Vorteile sind insbesonders zu nennen eine extrem niedrige Wärmeleitzahl, eine günstige Flammwidrigkeit und gute Zähigkeit.

Reine Propylenoxidpolyether, nach üblichen Verfahren hergestellt, sind in dem genannten OH-Zahl-Bereich extrem hochviskos (>50.000 mPa.s / 25°C) und liefern nur Hartschaumstoffe mit dem üblichen Eigenschaftsniveau. Das letztere gilt auch für relativ niedrigviskose reine Propylenoxidpolyether, wie sie nach US-PS 4 391 728 und US-PS 4 421 871 in Gegenwart von mindestens 0,8 % Alkalimetallhydroxid bei hohen Temperaturen hergestellt werden.

Reine Ethylenoxidpolyether wiederum sind aufgrund der primären OH-Gruppen für die meisten Hartschaumanwendungen zu aktiv.

Die gut geeigneten Polyether, die die schon erwähnten Anforderungen, nämlich pro Mol TDA etwa 4 Mol Ethylenoxid und dann Propylenoxid, erfüllen, sind in der Patentschrift US-PS 4 209 609 beschrieben. Nach dieser Patentschrift wird der Alkoxylierungskatalysator vorzugsweise nach der Ethylenoxidstufe zugegeben. Setzt man allerdings vor der Zugabe des Ethylenoxids einen der erwähnten aminischen Katalysatoren wie Triethylamin oder Pyridin ein, so erhält man sehr hochviskose Produkte mit ausschließlich tertiären Aminogruppen. Im Falle des direkten Einsatzes von KOH resultieren sehr niedrigviskose, jedoch nicht reproduzierbar herstellbare Produkte, wie auch schon in der Offenlegungsschrift 2 017 038, S. 5, Zeile 17, festgestellt wurde, die zudem noch sehr hohe Gehalte an freiem TDA (1 bis 2 Gew.-%) aufweisen.

Die Herstellung niedrigviskoser Polyether auf Basis o-TDA im OH-Zahl-Bereich 300 bis 500 nach einem Zweistufenverfahren wird in US-PS 4 562 290 beschrieben. Hierbei wird in der ersten Stufe 1 bis 3 Mol Ethylenoxid pro Mol o-TDA bei 125°C und dann nach Zugabe von KOH als Katalysator Propylenoxid bei mindestens 140°C zudosiert.

Die nach US-PS 4 209 609 herstellbaren Polyether auf Basis TDA sind nur beschränkt einsetzbar. Insbesondere Hartschaumplatten mit Dicken über 10 cm, die auf üblichen Doppeltransportband-Anlagen hergestellt und die zunehmend in den Bauordnungen vieler Länder verlangt werden, können mit diesen Materialien nicht gefertigt werden. Sie liefern zwar, wie schon oben erwähnt, Schaumstoffe mit niedrigen Wärmeleitzahlen, guten Flammwidirgkeiten und Zähigkeiten bei gutem Fließverhalten, neigen jedoch zur starken Rißbildung und Kernverfärbung, insbesondere bei großen Schichtdicken.

Es wurde nun überraschenderweise gefunden, daß man TDA- und MDA-Polyether mit hervorragenden Verschäumungseigenschaften ohne die genannten Nachteile, nämlich Rißbildung und Kernverfärbung, bei hohen Schichtdicken herstellen kann, die die gewünschten Eigenschaftsverbesserungen in Bezug auf gute Flammwidrigkeit, gute Zähigkeit und insbesondere gegenüber dem Stand der Technik eine noch weiter erniedrigte Wärmeleitzahl ergeben, wenn man als TDA 2,4- und/oder 2,6-Toluylendiamin oder deren Gemische mit o-Toluylendiamin, und als MDA Diphenylmethandi- und/oder -polyamine und/oder Methyldiphenylmethandi- und/oder -polyamine, wie sie in den EP-A 0 024 665, EP-A 0 046 556 und EP-A 0 046 917

2

EP 0 356 814 B1

beschrieben sind, einsetzt, und die Alkoxylierung mit zunächst Ethylenoxid und anschließend Propylenoxid von vornherein in Gegenwart von im folgenden näher erläuterten speziellen aminischen Katalysatoren durchführt.

Gegenstand der vorliegenden Erfindung ist somit ein Verfahren zur Herstellung von Polyetherpolyolen einer OH-Zahl von 500 bis 630, vorzugsweise 400 bis 560, auf Basis von 2,4- und/oder 2,6-Toluylendiamin oder deren Gemische mit o-Toluylendiamin oder auf der Basis von Diphenylmethandi- und/oder -polyaminen und/oder Methyldiphenylmethandi- und/oder -polyaminen, bei denen 2 bis 20 % der gegenüber Isocyanaten reaktiven Gruppen aus sekundären Aminogruppen bestehen und deren Gehalt an freiem aromatischem Amin unter 0,2 Gew.-% liegt, welches dadurch gekennzeichnet ist, daß die aromatischen Amine bei Temperaturen von 90 bis 125 °C zunächst mit 1 bis 2,5 Molen, vorzugsweise 1,55 bis 2,0 Molen, Ethylenoxid pro $NH_2$-Gruppe in Anwesenheit von 0,05 bis 1 Gew.-% eines aminischen Polyurethan-Schaumkatalysators und/oder eines Amines aus der Reihe N,N,N',N'-Tetramethylguanidin, N-Methylimidazol, Benzyltrimethylammoniumhydroxid sowie entsprechender Homologe, 2-Dialkylaminoethanol mit Alkylgruppen (Alkyl = $C_1$ bis $C_4$) und dann mit 0,5 bis 5,0 Molen, vorzugsweise 0,5 bis 3,0 Molen Propylenoxid pro $NH_2$-Gruppe umgesetzt werden, wobei die Gesamtmenge an Alkylenoxid 2,5 bis 5 Mol pro $NH_2$-Gruppe beträgt.

Ein weiterer Gegenstand der Erfindung ist die Verwendung der erfindungsgemäß hergestellten Polyether zur Herstellung von Polyurethan-Kunststoffen, vorzugsweise PU-Schaumstoffen einschließlich Polyisocyanurat-Schaumstoffen, welche insbesondere flammwidrige Eigenschaften aufweisen, durch Umsetzung von Polyethern auf Basis von 2,4- und/oder 2,6-Toluylendiamin oder deren Gemische mit o-Toluylendiamin, Diphenylmethandi- und/oder -polyamine und/oder Methyldiphenylmethandi- und/oder -polyamine, wie sie z. B. in den EP-A 0 024 665, EP-A 0 046 556 und EP-A 0 046 917 beschrieben sind, gegebenenfalls unter Zumischung anderer Polyether- oder Polyesterpolyole und einbaufähiger oder nicht einbaufähiger Flammschutzmittel, die bei der üblichen Herstellung von PU-Schaumstoffen nach dem Polyisocyanat-Polyadditionsverfahren verwendet werden.

Bei der erfindungsgemäßen Herstellungsweise wird ein erheblicher Teil der Aminogruppen (4 bis 40 Mol-%) nur monoalkoxyliert, so daß im Endprodukt 2 bis 20 % der gegenüber Isocyanaten reaktiven Gruppen als sekundäre Aminogruppen übrigbleiben. Hierdurch ist die Erniedrigung der Viskosität gegenüber den Produkten des Standes der Technik, bei denen alle Aminogruppen durchalkoxyliert sind, zu erklären.

Der Gehalt an sekundären Aminogruppen in den erfindungsgemäß hergestellten Polyethern kann aus der Differenz der OH-Zahlen ermittelt werden, die nach der Essigsäureanhydrid- bzw. der Phthalsäureanhydrid-Methode bestimmt werden. Mit der Essigsäureanhydrid-Methode wird, wie Modellversuche gezeigt haben, die Summe der OH- und NH-Gruppen erfaßt, nach der Phthalsäureanhydrid-Methode werden nur die OH-Gruppen acyliert.

Eine weitere Folge der vorhandenen sekundären Aminogruppen ist die Erniedrigung des Gehaltes an tertiären Aminogruppen, welche bei hohen Schaumtemperaturen, die entweder bei der Verschäumung zu hohen Schichtdicken oder zu hohen Rohdichten auftreten, Nebenreaktionen katalysieren und so Ursache für Rißbildung und Kernverfärbung sind.

Überraschenderweise enthalten die erfindungsgemäß hergestellten Polyether trotz der nur partiellen Alkoxylierung der Aminogruppen weniger als 0,2 %, in den meisten Fällen sogar unter 0,1 % freies TDA oder MDA.

Weitere Vorteile des erfindungsgemäßen Verfahrens sind

1. die Einsparung eines Neutralisationsschrittes und die Entsorgung von Alkalisalzen und

2. wegen der verhältnismäßig niedrigen Reaktionstemperaturen Vermeidung von Epoxidnebenreaktionen wie Aldehyd, Dioxan und Dioxolan-Bildung und damit Abluftproblemen und auch schließlich Verfärbungen.

Ein weiterer Vorteil der erfindungsgemäß hergestellten Polyether ist die durch die enthaltenen reaktiven sekundären Aminogruppen erhöhte Anfangsaktivität des Schaumgemisches, die zu Einsparungsmöglichkeiten an Katalysatoren führt.

Selbstverständlich lassen sich bei der erfindungsgemäßen Herstellung der Polyether auf Basis von 2,4- und/oder 2,6-Toluylendiamin oder deren Gemische mit o-Toluylendiamin, Diphenylmethandi- und/oder -polyamine und/oder Methyldiphenylmethandi- und/oder -polyamine, wie sie in der EP-A 0 024 665, EP-A 0 046 556 und EP-A 0 046 917 beschrieben sind, auch bis zu 50 Mol-% an Coinitiatoren wie Glycerin, Trimethylolpropan, Pentaerythrit, Sorbit, Sucrose, auch Diole wie Ethylenglykol, Diethylenglykol und Propylenglykol, ferner Ammoniak, aliphat. Amine und Alkanolamine mitverwenden. Es ist auch möglich, Gemische von TDA und MDA einzusetzen.

3

Das Verfahren wird im allgemeinen wie folgt ausgeführt:

TDA oder MDA wird zusammen mit dem Katalysator (0,15 bis 4,6 Gew.-%, bezogen auf das aromatische Amin) vorgelegt. Als Katalysatoren sind bekannte aminische Polyurethanschaumkatalysatoren, die auch handelsüblich sind, wie N,N'-Dimethylbenzylamin, N,N'-Dimethylcyclohexylamin, Pentamethyldiethylentriamin, 2,2'-Bis-(dimethylamino)-diethylether, N-Methyl-N'-(dimethylaminoethyl)-piperazin sowie Amine aus der Reihe N,N,N',N'-Tetramethylguanidin, N-Methylimidazol, Benzyltrimethylammoniumhydroxid und Homologe, 2-Dialkylaminoethanol mit Alkylgruppen von $C_1$ bis $C_4$ einsetzbar (vergl. auch DE-OS 2 624 527, DE-OS 2 624 528, DE-OS 2 636 787, DE-OS 1 720 633, US-PS 3 330 782, DE-AS 1 030 558, DE-OS 1 804 361 und DE-OS 2 618 280).

Bei 90 - 125°C wird im Verlauf von 2 bis 6 Stunden zunächst die 1- bis 2,5-fache molare Menge/Mol $NH_2$ an Ethylenoxid zudosiert und nach einer Nachreaktionszeit von ca. 2 Stunden die für die gewünschte OH-Zahl von 300 bis 630 erforderliche Menge an Propylenoxid. Nach weiteren 5 Stunden bei 125°C ist Alkylenoxid nur in Spuren nachweisbar, die im Vakuum entfernt werden. Ein weiterer Aufarbeitungsschritt ist danach nicht mehr nötig.

Die erfindungsgemäß hergestellten Produkte eignen sich in hervorragender Weise als Ausgangsprodukte für Polyurethan-Kunststoffe, bei denen üblicherweise Polyhydroxylverbindungen mit hohen OH-Zahlen eingesetzt werden, z. B. Beschichtungen, Verklebungen, Duromere, Sandwichwerkstoffe usw. Haupteinsatzgebiet sind jedoch Polyurethan-Hartschaumstoffe mit unterschiedlichen Polyisocyanuratgehalten.

Zur Herstellung von Polyurethanen, vorzugsweise Polyurethunhartschaumstoffen, werden neben den erfindungsgemäß hergestellten Polyethern eingesetzt:

Polyisocyanate:

Aliphatische, cycloaliphatische, araliphatische, heterocyclische und besonders aromatische Di- und/oder Polyisocyanate, wie sie z. B. von W. Siefken in Justus Liebigs Annalen der Chemie, 562, Seiten 75 - 136, beschrieben werden, beispielsweise solche der Formel $(Q(NCO)_n$, in der n = 2 - 4, vorzugsweise 2, und Q einen aliphatischen Kohlenwasserstoffrest mit 2 - 18, vorzugsweise 6 - 12 C-Atomen, einen cycloaliphatischen Kohlenwasserstoffrest mit 4 - 20, vorzugsweise 5 - 11 C-Atomen, einen aromatischen Kohlenwasserstoffrest mit 6 - 20, vorzugsweise 6 - 13 C-Atomen, oder einen araliphatischen Kohlenwasserstoffrest mit 8 - 15, vorzugsweise 8 - 13 C-Atomen bedeuten, z. B. solche Polyisocyanate wie sie in der DE-A 2 832 253, Seiten 10 - 11, beschrieben werden. Besonders bevorzugt werden die technisch leicht zugänglichen Polyisocyanate, z. B. das 2,4- und/oder 2,6-Toluylendiisocyanat sowie beliebige Gemische dieser Isomeren ("TDI"), Diphenylmethandiisocyanate (4,4'- und/oder 2,4'-, und/oder 2,2'-Isomere), Polyphenyl-polymethylen-polyisocyanate, wie sie durch Anilin-Formaldehyd-Kondensation und anschließende Phosgenierung hergestellt werden ("rohes MDI") und "modifizierte Polyisocyanate", die z. B. Carbodiimidgruppen, Urethangruppen, Allophanatgruppen, Isocyanuratgruppen, Harnstoffgruppen und/oder Biuretgruppen aufweisen; insbesondere solche modifizierten Polyisocyanate, die sich vom 2,4- und/oder 2,6-Toluylendiisocyanat und bevorzugt vom 4,4' - und/oder 2,4'-Diphenylmethandiisocyanat ableiten. Werden nur zweifunktionelle höhermolekulare Verbindungen und gegebenenfalls nur zweifunktionelle, weitere niedermolekulare Kettenverlängerungsmittel verwendet, so setzt man bevorzugt modifizierte Polyisocyanate mit einer Funktionalität von mehr als 2,0 ein bzw. verwendet tri- und/oder höherfunktionelle Polyisocyanate.

Ferner werden gegebenenfalls als Ausgangsmaterialien zur Polyurethan-Herstellung sogenannte Kettenverlängerungsmittel oder Vernetzer, d. h. Verbindungen mit mindestens zwei gegenüber Isocyanaten reaktionsfähigen Wasserstoffatomen und einem Molekulargewicht von 18 bis 399 mitverwendet. Auch in diesem Fall versteht man hierunter vorzugsweise Hydroxylgruppen und/oder Aminogruppen und/oder Thiolgruppen und/oder Carboxylgruppen und/oder Hydrazidgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 - 8, vorzugsweise 2 - 4, gegenüber Isocyanaten reaktionsfähige Wasserstoffatome auf. Beispiele werden hierfür in der DE-A 2 832 253, Seiten 19 - 20, beschrieben. Genannt seien Wasser, Triethanolamin, Ethylenglykol, Diethylenglykol, Trimethylolpropan, Formit-Gemische oder Glycerin.

In Mengen bis ca. 90 Gew.-%, bezogen auf die erfindungsgemäß hergestellten Polyether, können als höhermolekulare Co-Polyolkomponente Verbindungen mit mindestens zwei gegenüber Isocyanaten reaktionsfähigen Wasserstoffatomen von einem Molekulargewicht in der Regel von 200 - 1.500 mitverwendet werden. Hierunter versteht man insbesondere 2 - 8 Hydroxylgruppen aufweisende Polyester und/oder Polyether, wie sie für die Herstellung von homogenen und zellförmigen Polyurethanen an sich bekannt sind und wie sie z. B. in der DE-A 2 832 253, Seiten 11 - 18, beschrieben werden. Als Polyether sind solche bevorzugt, die durch Addition von einem oder mehreren Alkylenoxiden (Ethylenoxid und besonders Propylenoxid) an zwei- oder mehrwertige "Starter" (Propylenglykol, Glycerin, Sorbit, Formose, Saccharose, Triethanolamin, Trimethylolpropan) erhalten werden.

Die in Frage kommenden, Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele für solche Carbonsäuren und deren Derivate seien genannt:
Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren wie Ölsäure; Terephthalsäuredimethylester und Terephthalsäure-bis-glykolester. Als mehrwertige Alkohole kommen z. B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantrion-(1,2,6), Butantriol-(1,2,4), Trimethylolethan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z. B. $\epsilon$-Caprolacton, oder aus Hydroxycarbonsäuren, z. B. $\omega$-Hydroxycarpronsäure, sind einsetzbar.

Gegebenenfalls werden Hilfs- und Zusatzmittel, wie leichtflüchtige anorganische, jedoch bevorzugt organische Substanzen als Treibmittel, Katalysatoren der an sich bekannten Art, wie tert. Amine, Zinn(II)- und Zinn(IV)-Verbindungen, oberflächenaktive Zusatzstoffe wie Emulgatoren und Schaumstabilisatoren, Reaktionsverzögerern, z. B. sauer reagierende Stoffe wie Salzsäure oder organische Säurehalogenide, ferner Zellregler der an sich bekannten Art wie Paraffine, Fettalkohole oder Dimethylpolysiloxane sowie Pigmente oder Farbstoffe der an sich bekannten Art, ferner Stabilisatoren gegen Alterungs-, Licht- und Witterungseinflüsse, Weichmacher und fungistatisch und bakteriostatisch wirkende Substanzen, sowie Füllstoffe zugesetzt. Diese gegebenenfalls mitzuverwendenden Hilfs- und Zusatzstoffe werden beispielsweise in der DE-A 2 732 292, Seiten 21 - 24, ausführlich beschrieben. Weitere Beispiele der Hilfs-und Zusatzmittel werden im Kunststoffhandbuch, Band VII, herausgegeben von Vieweg und Höchtlen, Carl-Hanser-Verlag, München 1966, auf den Seiten 103 - 113, sowie im Kunststoffhandbuch, Band VII, herausgegeben von Becker und Braun, Carl-Hanser-Verlag, München 1983, auf den Seiten 92 - 111, beschrieben.

Mit den erfindungsgemäß hergestellten Polyethern erzeugte Hartschaumstoffe finden Verwendung als Dämmplatten, als Sandwich-Elemente mit verschiedenen Deckschichten, als Ortschaumstoffe wie Spritzschaumstoffe oder nach dem Überschichtungsverfahren hergestellte Schaumstoffe, als Sonnenkollektorfüllungen, als Rohrisolierung, als Füll- und Montageschaumstoffe und Blockschaumstoffe.

Ihre Herstellung erfolgt nach üblichen kontinuierlichen oder diskontinuierlichen Verfahren der Polyurethanverarbeitung wie z. B. der Doppelbandtechnik, Spritz- oder Gießverfahren, mit Hoch- oder Niederdruck-Verschäumungsmaschinen, wobei ihre relativ niedrigen Viskositäten Vorteile, insbesondere bei der maschinellen Verarbeitung, bieten.

Das erfindungsgemäße Verfahren wird durch die folgenden Beispiele näher erläutert.

Beispiele 1 bis 14 und Vergleichsbeispiele a bis c

Allgemeine Herstellungsvorschrift

In einen für Umsetzungen mit Alkylenoxiden geeigneten Reaktor wird unter Rühren in einer Stickstoffatmosphäre das aromatische Amin und der Katalysator vorgelegt und bei 90 - 125 °C das Ethylenoxid unter einem Stickstoffdruck von 1 - 3 bar zudosiert. Nach beendeter Zugabe des Ethylenoxids erfolgt nach einer Nachreaktion von 1 - 2 h die allmähliche Zugabe des Propylenoxids bei obiger Temperatur, gefolgt von einer weiteren Nachreaktion von ca. 5 h. Danach werden evtl. Spuren von freiem Alkylenoxid destillativ unter vermindertem Druck entfernt und nach Zugabe von ca. 0,1 Gew.-% Jonol® (Shell) wird der Inhalt des Reaktors abgelassen.

In der folgenden Tabelle 1 sind als Beispiele 14 Rezepturen, die resultierenden erfindungsgemäßen Polyetherpolyole und 3 Vergleichsbeispiele gegenübergestellt. Die darin verwendeten Abkürzungen haben folgende Bedeutung:

EP 0 356 814 B1

| EO | Ethylenoxid, angegeben in Mole/Mol Toluylendiamin |
|---|---|
| PO | Propylenoxid, angegeben in Mole/Mol Toluylendiamin |
| m-TDA: | Mischung aus 2,4- und 2,6-TDA im Verhältnis 80 : 20 |
| o-TDA: | Mischung aus 2,3- und 3,4-TDA |
| o-TDA[x]: | o-TDA mit ca. 10 % Verunreinigungen wie Diaminocyclohexan, Hexahydrotoluylendiamin usw. |
| MDA 70: | Kondensationsprodukt aus Anilin und Formaldehyd, 70 % Diphenylmethandiamin und 30 % Polyamin |
| Methyl-MDA: | Diaminomethyldiphenylmethan |

Bei den auf MDA gestarteten Polyethern wurde zunächst 1,8 Mol EO pro Mol $NH_2$ eingesetzt, danach PO bis zur gewünschten OH-Zahl.

c, der Vergleich zu Beispiel 12 (identische Zusammensetzung), wurde nach US-PS 3 499 009 hergestellt.

Katalysatoren

| 1: | N-Methylimidazol |
|---|---|
| 2: | Benzyltrimethylammoniumhydroxid als 40 %ige wäßrige oder methanol. Lösung |
| 3: | 2-Dimethylaminoethanol |
| 4: | 2-Dibutylaminoethanol |
| 5: | N,N'-Dimethylbenzylamin |
| 6: | N,N'-Dimethylcyclohexylamin |
| 7: | Pentamethyldiethylentriamin |
| 8: | 2,2'-Bis-(dimethylamino)-diethylether |
| 9: | N-Methyl-N'-(dimethylaminoethyl)-piperazin |
| 10: | KOH |
| 11: | Triethylamin |
| 12: | Pyridin |
| 13: | Tetramethylguanidin |

Die Menge in Gew.-% der in der Tabelle angegebenen Katalysatoren bezieht sich auf den Gesamtansatz.

Bei den Vergleichsbeispielen a, b und c wurde der Katalysator erst nach der Ethylenoxidstufe zugegeben.

Die mit Kalilauge katalysierten Polyetherpolyole wurden selbstverständlich nach beendeter Nachreaktion mit Schwefelsäure neutralisiert und bei der Aufarbeitung wurden die Salze abfiltriert.

Die angegebenen OH-Zahlen sind sowohl nach der Essigsäureanhydrid ($Ac_2O$)-Methode als auch nach der Phthalsäureanhydrid (PSA)-Methode bestimmt worden. Die Differenz der Werte beider Methoden gibt den Gehalt an sekundären NH-Gruppen an.

6

## Tabelle 1

| Nr. | Starter (Gew.-Verh.) | Katalysator | Katalysator Gew.-% | Mol EO | Katalysator | Katalysator Gew.-% | Mol PO | OH-Zahl (Ac$_2$O) | OH-Zahl (PSA) | $\eta^{25}_{0}$ (mPas) | TDA Gew.-% |
|---|---|---|---|---|---|---|---|---|---|---|---|
| 1 | m-TDA | 1 | 0,25 | 3,6 | | | 3,4 | 470 | 425 | 7.980 | 0,04 |
| 1a | m-TDA | | | 3,6 | 10 | 0,3 | 3,4 | 468 | 467 | 18.600 | 0,002 |
| 2 | m-TDA/o-TDA(9:1) | 3 | 0,3 | 3,6 | | | 3,4 | 469 | 435 | 8.090 | 0,05 |
| 3 | m-TDA/o-TDA(7:3) | 2 | 0,2 | 3,6 | | | 3,4 | 469 | 448 | 8.800 | 0,06 |
| 4 | m-TDA/o-TDA(1:1) | 1 | 0,15 | 3,6 | | | 3,4 | 471 | 433 | 7.360 | 0,04 |
| 4b | m-TDA/o-TDA(1:1) | | | 3,6 | 10 | 0,3 | 3,4 | 472 | 468 | 18.900 | 0,003 |
| 5 | m-TDA/o-TDA(3:7) | 7 | 0,2 | 3,6 | | | 3,4 | 468 | 432 | 6.590 | 0,05 |
| 6 | m-TDA/o-TDA(1:9) | 1 | 0,1 | 3,6 | | | 3,4 | 469 | 428 | 9.020 | 0,03 |
| 7 | m-TDA/o-TDAx(1:9) | 1 | 0,1 | 3,6 | | | 2,33 | 464 | 426 | 8.050 | 0,03 |
| 8 | m-TDA | 3 | 0,5 | 3,6 | | | 4,8 | 539 | 510 | 9.650 | 0,09 |
| 9 | m-TDA | 1 | 0,3 | 3,6 | | | 5,9 | 401 | 380 | 4.490 | 0,04 |
| 10 | m-TDA | 1 | 0,3 | | | | 3,4 | 360 | 340 | 3.100 | 0,03 |
| 11 | m-TDA | 13 | 0,4 | | | | | 468 | 430 | 8.350 | 0,04 |
| 12 | MDA70 | 5 | 0,5 | | | | | 470 | 425 | 58.520 | |
| 12c | MDA70 | | | | 10 | 0,3 | | 468 | 462 | 2.013.000 | |
| 13 | MDA70 | 1 | 0,5 | | | | | 420 | 375 | 11.680 | |
| 14 | Methyl-MDA | 4 | 0,5 | | | | | 470 | 442 | 29.750 | |
| 15 | m-TDA/MDA 70(1:1) | 1 | 0,4 | | | | | 470 | 430 | 25.000 | |

Verwendungsbeispiele

In den nachfolgenden Tabellen sind unter Verwendung einiger erfindungsgemäßer Polyole beispielhaft Rezepturen zur Herstellung von Polyurethan-, Polyurethan-/harnstoff-Hartschaumstoffe bzw. Polyisocyanurat-Strukturen enthaltenden Hartschaumstoffen wiedergegeben.

Ausgangsrohstoffe

Als Isocyanate wurden handelsübliche Polyphenyl-polymethylenpolyisocyanate, die durch Phosgenierung von Anilin-Formaldehyd-Kondensaten erhalten wurden und NCO-Gehalte von 30 - 32 Gew.-% aufweisen, verwendet (Desmodur 44 V 20, Desmodur 44 V 40 und Desmodur 44 V 70 der Bayer AG).

Beispiel 15

Harte Polyurethanschaumstoffe wurden aus den in den Beispielen A - E (Tabelle 2) beschriebenen, erfindungsgemäßen Polyolen unter Verwendung der nachfolgenden Rezeptur hergestellt,
70 Gew.-% Polyolabmischung I
30 Gew.-% m-TDA-EO-PO
1,4 Gew.-% Dimethylcyclohexylamin
40 Gew.-% R11
153 Gew.-% Desmodur 44 V 20

Tabelle 2

| | A | B | C | D | E |
|---|---|---|---|---|---|
| verwendeter m-TDA-Polyether aus Beispiel | 1 | 8 | 9 | 10 | 11 |
| relative Aushärtung der nach Beispiel 15 hergestellten Schaumstoffe | 1,30 | 1,32 | 1,30 | 1,43 | 1,35 |
| Brandverhalten (DIN 4102; Flammenhöhe in mm) der nach Beispiel 15 hergestellten Schaumstoffe | 127 | 130 | 120 | 120 | 130 |
| Rißbildung der nach Beispiel 18 hergestellten Schaumstoffe | nein | nein | nein | nein | nein |

Polyolabmischung I

15 Gew.-% Ethylendiamin-PO-Polyether, OH-Zahl: 630
9 Gew.-% Glycerin
9 Gew.-% Dimethyl-N,N'-bis-(hydroxypropyl)-aminomethylphosphonat
20 Gew.-% Dibrombutendiol-Epichlorhydrin-Polyether (OH-Zahl: 330; 32 % Br; 6,8 % Cl)
15 Gew.-% Tris-chlorethylphosphat
1,4 Gew.-% Stabilisator
0,6 Gew.-% Wasser
indem die erfindungsgemäßen m-TDA-EO-PO-Polyether mit der Polyolabmischung I, Aktivator und R11 innig miteinander vermischt und nach Zugabe der aufgeführten Isocyanatmengen noch 6 - 12 sec. verrührt und dann in eine offene Form gegossen wurden.

Es entstanden freie Schaumstoffe der Abmessung 30 x 30 x 30 cm$^3$ mit einer Rohdichte von 25 - 30 kg/m$^3$, deren Aushärtung nach einem manuellen Verfahren bestimmt wurde, weshalb die Ergebnisse nur relativ zueinander bewertet werden können.

Das Brandverhalten der Schaumstoffe wurde nach DIN 4102 geprüft.

Beispiel 16

Entsprechend Beispiel 15 wurden Schaumstoffe unter Verwendung erfindungsgemäßer TDA-Polyole mit o- und m-TDA als Starter hergestellt (Beispiel F - L in Tabelle 3 unter Verwendung der Polyole nach Beispiel 2 - 7).

Beispiel 17

Stellvertretend für andere, nach den beanspruchten Verfahren aus aromatischen Di- und Polyaminen hergestellte Polyole wurden Schaumstoffe auf Basis von MDA und Methyl-MDA-Polyethern hergestellt (Beispiel M - O in Tabelle 4 unter Verwendung der Polyole nach Beispiel 12 - 14).

Tabelle 3

|  | F | G | H | I | K | L |
|---|---|---|---|---|---|---|
| verwendeter TDA-Polyether aus Beispiel | 2 | 3 | 4 | 5 | 6 | 7 |
| relative Aushärtung der nach Beispiel 16 hergestellten Schaumstoffe | 0,79 | 1,02 | 0,92 | 1,13 | 1,12 | 1,12 |
| Brandverhalten (DIN 4102; Flammenhöhe in mm) der nach Beispiel 16 hergestellten Schaumstoffe | 137 | 120 | 120 | 117 | 127 | 130 |
| Rißbildung der nach Beispiel 19 hergestellten Schaumstoffe | nein | nein | nein | nein | nein | nein |
| Quellung der nach Beispiel 19,2 hergestellten Schaumstoffe | 6 mm | 7 mm | 7,5 mm | 8 mm | 8,5 mm | 8,5 mm |

Beispiel 18

Entsprechend Beispiel 15 wurden unter Verwendung der Polyole aus Beispiel 1, 8, 9, 10, 11 Schaumstoffe mit einer Rohdichte von ca. 65 kg/m$^3$ hergestellt, in dem der R11-Gehalt von ca, 40 Gew.-Teilen auf ca. 10 Gew.-Teile und der Aktivatoranteil auf 0,5 Teile gesenkt wurde. Als Isocyanat wurde Desmodur 44 V 70 verwendet. Die Schaumstoffe wurden 18 - 24 Stunden nach der Herstellung aufgeschnitten und auf Rißbildungen geprüft. Bei Verwendung der erfindungsgemäßen m-TDA-EO-PO-Polyether konnte in dem genannten Rohdichtebereich bei keinem Schaumstoff Kernverbrennung bzw. Rißbildung beobachtet werden (Tabelle 2, Beispiel A - E).

Beispiel 19

1. Die aus verschiedenen o-/m-TDA-Startergemischen hergestellten Polyole (Beispiel 2 - 7) wurden entsprechend Beispiel 18 zu Schaumstoffen mit Rohdichten von 50-53 kg/m$^3$ verarbeitet. In dem genannten Rohdichtebereich konnten keine Kernverbrennungen bzw. Rißbildungen beobachtet werden (Tabelle 3, Beispiel F - L). Bei noch höheren Rohdichten (ab ca. 60 kg/m$^3$} kann mit zunehmendem Anteil an o-TDA im Starter eine zunehmende Tendenz zur Rißbildung beobachtet werden.
2. Die erfindungsgemäßen Polyole eignen sich besonders zur Herstellung von Hartschaumstoffen, wo eine kurze Formstandzeit (z. B. Kühl- und Gefrierschrankindustrie) bzw. eine kurze Verweilzeit im Doppelband (Herstellung von Sandwichelementen) gefordert wird.

Dazu wurde in eine Form mit den Abmessungen 35 x 35 x 10 cm Rohstoffe entsprechend Beispiel 16 eingetragen. Nach 8 Minuten wurden die Schaumstoffe der Rohdichte 30 kg/m$^3$ entfernt und die Quellung an ihnen nach einer weiteren Stunde gemessen. Mit den erfindungsgemäßen Polyolen konnten kurze Formstandzeiten erzielt werden, wobei mit zunehmendem Anteil an m-TDA im Starter die geringste Quellung und damit das günstigste Formstandzeitverhalten gemessen wurde.

Tabelle 4

| | M | N | O |
|---|---|---|---|
| verwendeter MDA- bzw. Methyl-MDA-Polyether aus Beispiel | 12 | 13 | 14 |
| relative Aushärtung der nach Beispiel 17 hergestellten Schaumstoffe | 1,79 | 2,2 | 1,88 |
| Brandverhalten (DIN 4102; Flammenhöhe in mm) der nach Beispiel 17 hergestellten Schaumstoffe | 143 | 130 | 130 |

Vergleichsbeispiel d

Entsprechend Beispiel 18 wurden Schaumstoffe aus m-TDA-EO-PO-Polyethern, die in der Propylenendstufe mit Metallhydroxiden katalysiert wurden (Polyol aus Vergleichsbeispiel a) hergestellt. Im genannten Rohdichtebereich wurde in den Schaumstoffen nach Aufschneiden Rißbildung deutlich.

Vergleichsbeispiel e

Entsprechend Beispiel 19 / 1 und 2 hergestellte Schaumstoffe aus TDA-Polyethern mit o- und m-TDA als Starter und hergestellt durch Katalysatorzugabe nach der Ethylenoxidstufe (Polyol aus Vergleichsbeispiel b) zeigen besonders starke Rißbildungserscheinungen.

Beispiel 20

In an sich bekannter Weise wurden auf einer handelsüblichen Doppeltransportband-Anlage (DTB-Anlage) durch maschinelles Vermischen der Komponenten Polyurethan-Hartschaumplatten hergestellt und bezüglich ihres Brandverhaltens und ihrer Wärmeleitfähigkeit geprüft sowie die Kernverbrennungen und Rißbildung beurteilt (Tabelle 5). Beispiel P in Tabelle 5 gibt die Verwendungsmöglichkeit eines erfindungsgemäßen Polyols aus der TDA-Reihe und Beispiel Q in Tabelle 5 eines aus der MDA-Reihe wieder.

Vergleichsbeispiel f

m-TDA- bzw. m-/o-TDA-EO-PO-Polyether die nach der Ethylenoxidstufe katalysiert werden, neigen bei Schaumstoffen höherer Schichtdicke zu Rißbildungen.

Vergleichsbeispiel g

MDA- bzw. Methyl-MDA-Polyether, die nach der Ethylenoxidstufe katalysiert werden, konnten aufgrund der hohen Viskosität auch in Abmischung nicht mit der Hochdrucktechnik verarbeitet werden.

Tabelle 5

| | Beispiel 20 | Vergleichsbeispiel | | |
|---|---|---|---|---|
| | P | Q | f | g |
| Polyol aus Beispiel 1 | 27 | - | - | - |
| Polyol aus Beispiel 13 | - | 27 | - | - |
| Polyol aus Vergl.-Bsp. a | - | - | 27 | - |
| Polyol aus Vergl.-Bsp. c | - | - | - | 27 |
| Phthalsäureester (OH-Zahl: 425) | 22 | 22 | 22 | 22 |
| Glycerin | 10 | 10 | 10 | 10 |
| Ethylendiamin-PE (OH-Zahl: 630) | 10 | 10 | 10 | 10 |
| Ixol B 251 (OH-Zahl: 330) | 19 | 19 | 19 | 19 |
| Trischlorethylphosphat | 12 | 12 | 12 | 12 |
| Stabilisator | 1 | 1 | 1 | * |
| Wasser | 0,5 | 0,5 | 0,5 | * |
| R11 | 33 | 33 | 33 | * |
| Dimethylcyclohexylamin | 0,6 | 0,6 | 0,6 | * |
| Desmodur 44 V 40 | 153 | 150 | 153 | * |
| Startzeit / sek. | 10 | 10 | 10 | * |
| Abbindezeit / sek. | 47 | 47 | 48 | * |
| Plattenrohdichte kg/m$^3$ | 32 | 33 | 32 | * |
| Plattendicke / mm | 150 | 150 | 150 | * |
| Druckfestigkeit / MPa | 0,13 | 0,11 | 0,12 | * |
| Wärmeleitfähigkeit | 0,018 | 0,018 | 0,018 | * |
| W/m.K. (Flußmethode: 24 °C) | | | | * |
| Brandtest (DIN 4102) / mm | B 2 | B 2 | B 2 | * |
| Kernverbrennung | nein | nein | nein | * |
| Rißbildung | nein | nein | ja | * |
| *) Viskosität bei 25 °C )14000 mPa.s nicht verarbeitbar | | | | |

Beispiel 21

Die Verwendung der erfindungsgemäßen Polyole zur Herstellung von Schaumstoffen mit einem verminderten R11-Anteil bzw. mit anderen Treibmitteln wie R11, beispielhaft wurde hier R123 und R22 verwendet, kann z. B. entsprechend nachfolgenden Rezepturen erfolgen.

| | P | S | T | U |
|---|---|---|---|---|
| Polyol aus Beispiel 9 (OH-Zahl: 380) | - | 29 | - | - |
| Polyol aus Beispiel 1 (OH-Zahl: 470) | 29 | - | 29 | 29 |
| Wärmeleitfähigkeit | 0,018 | 0,019 | 0,022 | 0,020 |
| Phthalsäureester (OH-Zahl: 425) | 19 | 19 | 19 | 19 |
| Ethylendiamin-PE (OH-Zahl: 630) | 10 | 10 | 10 | 10 |
| Glycerin | 9 | 9 | 9 | 9 |
| Tris-chlorethylphosphat | 16 | 16 | 16 | 16 |
| Stabilisator | 1 | 1 | 1 | 1 |
| Ixol B 251 (OH-Zahl: 330) | 16 | 16 | 16 | 16 |
| Wasser | 1 | 2,7 | 2,3 | 1 |
| R22 | - | - | 17 | - |
| R123 | - | - | - | 43 |
| R11 | 38 | 20 | - | |
| Desmodur 44 V 40 | 150 | 174 | 172 | 150 |
| Startzeit / sek. | 6 | 8 | - | 7 |
| Abbindezeit / sek. | 28 | 29 | 27 | 29 |
| Plattendicke / mm | 60 | 60 | 60 | 60 |
| Rohdichte / kg/m$^3$ | 32 | 32 | 33 | 33 |
| DMCHA | 1,4 | 1,4 | 1,2 | 1,4 |

Beispiel 22

Die Verwendung der erfindungsgemäßen Polyole zur Herstellung von Schaumstoffen mit einem höheren Anteil an Isocyanuratstrukturen kann z. B. entsprechend nachfolgender Rezeptur erfolgen:

1 Gew.-% Kaliumacetat

1,2 Gew.-% Dimethylcyclohexylamin

20 Gew.-% TDA-PE (z. B. aus Beispiel 1

31 Gew.-% Zucker, Propylenglykol, Wasser-PO-Polyether; OHZ = 470

13 Gew.-% Ethylendiamin-PO-Polyether; OHZ = 630

7 Gew.-% Vernetzer; OHZ = 1230

3 Gew.-% Stabilisator

26 Gew.-% Tris-chlorethylphosphat

56 Gew.-% R11

270 Gew.-% Desmodur 44 V 20®

Reaktionszeiten:

| | |
|---|---|
| Rührzeit: | 10 sek. |
| Startzeit: | 12 sek. |
| Abbindezeit: | 48 sek. |

| | |
|---|---|
| Schaumstoffrohdichte; | 29 kg/m$^3$ |
| Brandprüfung (DIN 4102): | B2 |
| BVD-Test (Schweiz): | Klasse V/3 |

**Patentansprüche**

1. Verfahren zur Herstellung von Polyetherpolyolen, einer OH-Zahl von 300 bis 630 auf Basis von 2,4- und/oder 2,6-Toluylendiamin oder deren Gemischen mit o-Toluylendiamin oder auf der Basis von Diphenylmethandi- und/oder -polyaminen und/oder Methyldiphenylmethandi- und/oder -polyaminen, bei denen 2 - 20 % der gegenüber Isocyanaten reaktiven Gruppen aus sekundären Aminogruppen bestehen und deren Gehalt an freiem aromatischem Amin unter o,2 Gew.-% liegt, dadurch gekennzeichnet, daß die aromatischen Amine bei Temperaturen von 90 - 125°C zunächst mit 1 - 2,5 Molen Ethylenoxid pro $NH_2$-Gruppe in Anwesenheit von 0,05 - 1 Gew.-% eines aminischen Polyurethan-Schaumkatalysators und/oder eines Amines aus der Reihe N,N,N',N'-Tetramethylguanidin, N-Methylimidazol, Benzyltrimethylammoniumhydroxid sowie entsprechender Homologe, 2-Dialkylaminoethanol mit Alkylgruppen (Alkyl = $C_1$ bis $C_4$) und dann mit 0,5 -5,0 Molen Propylenoxid pro $NH_2$-Gruppe umgesetzt werden, wobei die Gesamtmenge an Alkylenoxid 2,5 - 5 Mol pro $NH_2$-Gruppe beträgt.

2. Verfahren nach Anspruch 1, dadurch gekennzeichnet, daß Polyetherpolyole mit einer OH-Zahl von 400 bis 560 hergestellt werden.

3. Verfahren nach einem der Ansprüche 1 oder 2, dadurch gekennzeichnet, daß die Umsetzung zunächst mit 1,55 bis 2,0 Molen Ethylenoxid pro $NH_2$-Gruppen erfolgt.

4. Verfahren nach einem der Ansprüche 1 bis 3, dadurch gekennzeichnet, daß die Umsetzung mit 0,5 bis 3,0 Molen Propylenoxid pro $NH_2$-Gruppen erfolgt.

5. Verwendung der Polyetherpolyole aus dem Herstellungsverfahren nach einem der Ansprüche 1 bis 4 als Ausgangsprodukte zur Herstellung von Kunststoffen auf Polyisocyanatbasis, vorzugsweise PU-Schaumstoffen einschließlich Polyisocyanurat-Schaumstoffen, durch Umsetzung von organischen Polyisocyanaten mit höhermolekularen Verbindungen mit gegenüber NCO-reaktiven Gruppen mit reaktiven H-Atomen, vorzugsweise höhermolekularen Polyhydroxylverbindungen, gegebenenfalls Wasser und/oder niedermolekularen Kettenverlängerungsmitteln und/oder Vernetzern in Gegenwart von üblichen Hilfs- und Zusatzstoffen, Katalysatoren einschließlich Trimerisierungskatalysatoren.

**Claims**

1. A process for the production of polyether polyols with an OH value of 300 to 630 based on 2,4- and/or 2,6-tolylenediamine or mixtures thereof with o-tolylenediamine or based on diphenyl methane diamines and/or polyamines and/or methyl diphenyl methane diamines and/or polyamines, in which 2 to 20% of the isocyanate-reactive groups consist of secondary amino groups and which have a free aromatic amine content of less than 0.2% by weight, characterized in that the aromatic amines are reacted at temperatures of 90 to 125°C first with 1 to 2.5 mols of ethylene oxide per $NH_2$ group in the presence of 0.05 to 1% by weight of an aminic polyurethane foam catalyst and/or an amine from the group consisting of N,N,N',N'-tetramethyl guanidine, N-methyl imidazole, benzyl trimethylammonium hydroxide and corresponding homologs, 2-dialkylaminoethanol containing alkyl groups (alkyl = $C_{1-4}$) and then with 0.5 to 5.0 moles of propylene oxide per $NH_2$ group, the total quantity of alkylene oxide being from 2.5 to 5 mols per $NH_2$ group.

2. A process as claimed in claim 1, characterized in that polyether polyols with an OH value of 400 to 560 are produced.

3. A process as claimed in claim 1 or 2, characterized in that the reaction is initially carried out with 1.55 to 2.0 mols of ethylene oxide per $NH_2$ group.

4. A process as claimed in any of claims 1 to 3, characterized in that the reaction is carried out with 0.5 to 3.0 mols of propylene oxide per $NH_2$ group.

5. The use of the polyether polyols produced by the process claimed in any of claims 1 to 4 as starting products for the production of plastics based on polyisocyanates, preferably PU foams, including polyisocyanurate foams, by reaction of organic polyisocyanates with relatively high molecular weight compounds containing NCO-reactive groups with reactive H atoms, preferably relatively high molecular weight polyhydroxyl compounds, optionally water and/or low molecular weight chain-extending agents and/or crosslinking agents in the presence of typical auxiliaries and additives, catalysts, including trimerization catalysts.

## Revendications

1. Procédé pour la préparation de polyéther-polyols ayant un indice OH de 300 à 630, à base de 2,4- et/ou 2,6-toluylènediamine ou de leurs mélanges avec la o-toluylènediamine ou encore à base de diphénylméthanedi- et/ou polyamines et/ou de méthyldiphénylméthanedi- et/ou polyamines, dans lesquels 2-20% des groupes réactifs vis-à-vis d'isocyanates sont constitués par des groupes amino secondaires et dont la teneur en amine aromatique libre se situe en dessous de 0,2% en poids, caractérisé en ce qu'on fait réagir les amines aromatiques à des températures de 90-125°C d'abord avec 1-2,5 moles d'oxyde d'éthylène par groupe $NH_2$ en présence de 0,05-1% en poids d'un catalyseur aminique de mousse de polyuréthanne et/ou d'une amine de la série de la N,N,N',N'-tétraméthylguanidine, du N-méthylimidazole, de l'hydroxyde de benzyltriméthylammonium, ainsi que d'homologues correspondants, du 2-dialkylaminoéthanol contenant des groupes alkyle ( groupes alkyle en $C_1$-$C_4$) et ensuite, avec 0,5-5,0 moles d'oxyde de propylène par groupe de $NH_2$, la quantité totale d'oxydes d'alkylènes s'élevant à 2,5-5 moles par groupe $NH_2$.

2. Procédé selon la revendication 1, caractérisé en ce qu'on prépare dos polyéther-polyols ayant un indice OH de 400 à 560.

3. Procédé selon l'une quelconque des revendications 1 ou 2, caractérisé en ce que la mise en réaction a lieu d'abord avec de 1,55 à 2,0 moles d'oxyde d'éthylène par groupe $NH_2$.

4. Procédé selon l'une quelconque des revendications 1 à 3, caractérisé en ce que la mise en réaction a lieu avec de 0,5 à 3,0 moles d'oxyde de propylène par groupe $NH_2$.

5. Utilisation des polyéther-polyols issus du procédé de préparation selon l'une quelconque des revendications 1 à 4, comme produits de départ pour la préparation de matières synthétiques à base de polyisocyanates, de préférence de mousses PU, y compris des mousses de polyisocyanurate par mise en réaction de polyisocyanates organiques avec des composés à poids moléculaires plus élevés contenant des groupes réactifs vis-à-vis des fonctions NCO pourvus d'atomes H réactifs, de préférence avec des composés polyhydroxylés à poids moléculaires plus élevés, éventuellement de l'eau et/ou des agents d'allongement de chaînes et/ou des agents de réticulation à bas poids moléculaires, en présence d'adjuvants et d'additifs habituels, de catalyseurs, y compris des catalyseurs de trimérisation.